# EUROPEAN PATENT APPLICATION

(11) **EP 1 526 325 A2**
(43) Date of publication of application: **27.04.2005**
(21) Application number: 04025316.3
(22) Date of filing: 25.10.2004
(51) Int. Cl.: F17C 1/14, F17C 1/16

(54) **Aluminium cylinder with a plastic coating**

(30) Priority: 23.10.2003 US 692116
(71) Applicant: Harsco Technologies Corporation, Fairmont, Minnesota 56031 (US)
(72) Inventor: Caudill, Ronald, Santa Ana , CA 92705 (US); Beck, Robert, Victorville, CA 92392 (US); Newman, Gary, Upland, CA 91784 (US); Lim, Honorio, West Covina, CA 91792 (US)
(74) Representative: Carstairs, James Campbell

(57) **Abstract**

A gas cylinder (14) having an aluminium shell (22), a composite wrap (20), and a plastic coating (24). The aluminium shell (22) has an outer side (26) and an inner side (28) defining a storage space (30). The composite wrap (20) is disposed about the aluminium shell (22). The plastic coating (24) is disposed on the cylinder inner side (28).

## Description

### BACKGROUND OF THE INVENTION

This invention relates to high pressure gas cylinders.

### Background Information

Cylinders used for high pressure gas storage commonly are typically one of three varieties: all metal (commonly steel), a metal shell over-wrapped with composite materials, or a plastic shell over-wrapped with composite materials. Each type cylinder will have fill-use" cycle lives of 8,000-10,000 cycles - before ending their useful life. Each type of cylinder has advantages and disadvantages. For example, a steel cylinder is strong but heavy; a composite/aluminium cylinder is light, but typically has a limited fill-use cycle; and a composite/plastic cylinder is light but is weak and prone to damage.

There have been two general combinations of these technologies. Steel cylinder have been wrapped with composite materials to allow thinner, lighter shells while maintaining their strength. Additionally, steel cylinders have included independent plastic linings to prevent reaction with stored fluids. However, because composite/aluminium cylinders and composite/plastic cylinders shared the advantage of being light, while generally being more inert than steel, there has not been a need to combine these two technologies.

### SUMMARY OF THE INVENTION

It has been determined that when an composite/aluminium cylinder is combined with a plastic coating, the total weight of the cylinder is reduced, compared with the all metal cylinders, and the cycle life is significantly extended over that achievable by the base designs. More specifically, it has been found that use of the plastic coating on a composite/aluminium cylinder increases the cycle life of a cylinder between about 50% to 150%.

According to the present invention there is provided a gas cylinder (14) comprising: shell formed of aluminium material (22), having an outer side (26) and an inner side (28) defining a storage space (30); a composite wrap (20) disposed about said aluminium shell (22); and a plastic coating (24) disposed on said inner side (28).

In a preferred embodiment, the aluminium material is aluminium.

In an alternative embodiment, the aluminium material is an aluminium alloy.

Conveniently, said plastic coating is heat bonded to said inner side (28).

Advantageously, said plastic coating is a polyethylene copolymer.

Preferably, the storage space is between about 0.5 and 500 litres.

Preferably, the composite wrap is carbon or aramid and fibreglass.

Advantageously, said cylinder is structured to contain gas at a pressure between about 3.44Mpa to 68.7Mpa [500 to 10,000 Psi].

According to another aspect of the present invention, the gas cylinder is incorporated into a cylinder assembly, the assembly further comprising a valve assembly structured to sealingly engage the cylinder.

The aluminium/composite/plastic cylinder is a light weight, thin walled cylinder containing an interior plastic coating that is heat-bonded to the aluminium. The aluminium liner is surrounded by a composite outer wrap, typically carbon or aramid and fibreglass filaments held within an epoxy resin matrix. The cylinder is designed to contain gas ranging in pressure from 3.44 to 68.7Mpa[500 to 10,000psi]. The cylinders typically range in volume from 0.5 to 500 litres. Such cylinders are especially adapted to be used as a self-contained breathing apparatus, a home oxygen therapy cylinder, a commercial aviation cylinder, a fuel storage cylinder in natural gas and hydrogen vehicles, and with military and aerospace applications.

### BRIEF DESCRIPTION OF THE DRAWINGS

A full understanding of the invention can be gained from the following description of the preferred embodiments when read in conjunction with the accompanying drawings in which:
Figure 1 is a side view of a cylinder assembly
Figure 2 is a partial cutaway view of the cylinder shown in Figure 1.

### DESCRIPTION OF THE PREFERRED EMBODIMENTS

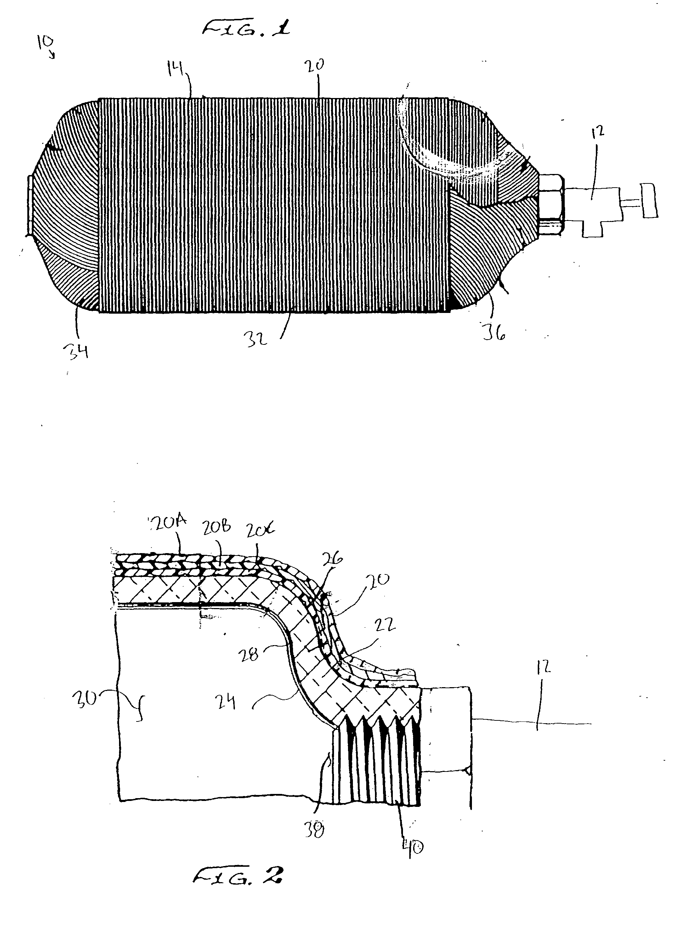

As shown in Figure 1, a cylinder assembly 10 includes a valve assembly 12 and a high pressure gas cylinder 14. The valve assembly 12 may be any type of valve assembly 12 known in the art. The valve assembly 12 is structured to sealingly engage the gas cylinder 14 and is further structured to move between a closed position, wherein fluid may not pass through the valve assembly 12, and an open position, wherein fluid may pass through the valve assembly 12.

The gas cylinder 14, as shown in Figure 2, includes an outer composite wrap 20, a shell 22 formed from aluminium material in the form of aluminium and a plastic coating 24. The aluminium shell 22 has an outer side26 and an inner side 28. The inner side 28 defines a storage space 30. The aluminium shell 22 is, preferably, an elongated cylinder 32 having a dome 34, 36 at each end (Fig 1). The storage space 30 preferably holds between about 0.5 to 500 litres of fluid. One dome 36 includes a neck passage 38 through which fluid may pass to and from the storage space 30. The aluminium shell 22 at the neck passage 38 may have threads 40 structured to engage the valve assembly 12 or a plug (not known).

The composite wrap 20 is disposed on the cylinder outer side 26. The composite wrap 20 includes a filament material and an epoxy resin. Preferably the composite wrap 20 includes carbon or aramid and fibreglass material. The composite wrap 20, preferably, covers the entire cylinder outer side 26. The composite wrap 20 may include multiple layers 20A, 20B, 20C applied over the cylinder outer side 26.

The plastic coating 24 is applied to the cylinder inner side 28 and is, preferably, adhered by heat bonding. The plastic coating 24 is, preferably, a polyethylene copolymer such as polyolefin resin and olefinic polymer blends.

In an alternative embodiment, the aluminium material forming the shell is in the form of an aluminium alloy i.e. an alloy having a substantial aluminium content.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A gas cylinder (14) comprising:
a shell formed of aluminium material (22), having an outer side (26) and an inner side (28) defining a storage space (30);
a composite wrap (20) disposed about said aluminium shell (22); and
a plastic coating (24) disposed on said inner side (28).

2. A gas cylinder according to claim 1, wherein the aluminium material is aluminium.

3. A gas cylinder according to claim 1, wherein the aluminium material is an aluminium alloy.

4. A gas cylinder (14) according to any preceding claim, wherein said plastic coating (24) is heat bonded to said inner side (28).

5. A gas cylinder (14) according to any preceding claim, wherein said plastic coating (24) is a polyethylene copolymer.

6. A gas cylinder (14) according to any preceding claim, wherein said storage space (30) is between about 0.5 and 500 litres.

7. A gas cylinder (14) according to any preceding claim, wherein said composite wrap (20) is carbon or aramid and fibreglass.

8. A gas cylinder (14) according to any preceding claim, wherein said cylinder (14) is structured to contain gas at a pressure between about 3.44Mpa to 68.7Mpa [500 to 10,000 Psi].

9. A cylinder assembly (10) comprising:
a gas cylinder (14) according to any preceding claim; and
a valve assembly (12) structured to sealingly engage the cylinder (14).
